# EUROPÄISCHE PATENTSCHRIFT

(11) **EP 1 648 721 B1**
(45) Veröffentlichungstag und Bekanntmachung des Hinweises auf die Patenterteilung: **22.11.2006**
(21) Anmeldenummer: 04741951.0
(22) Anmeldetag: 02.07.2004
(51) Int. Cl.: B60C 23/00

(54) **VORRICHTUNG ZUR LUFTBEFÜLLUNG EINES ROTIERENDEN LUFTREIFENS**
DEVICE FOR INFLATING A ROTATING TYRE
DISPOSITIF POUR GONFLER UN PNEU EN ROTATION

(30) Priorität: 01.08.2003 DE 10335244
(43) Veröffentlichungstag der Anmeldung: 26.04.2006
(73) Patentinhaber: Bayerische Motoren Werke Aktiengesellschaft, 80809 München (DE)
(72) Erfinder: ELLMANN, Manfred, 84172 Buch am Erlbach (DE)
(86) Internationale Anmeldenummer: PCT/EP2004/051342
(87) Internationale Veröffentlichungsnummer: WO 2005/012009

(56) Entgegenhaltungen:
- WO-A-03/049958
- DE-A- 4 323 835
- DE-T- 3 881 591

## Beschreibung

Die Erfindung betrifft eine Vorrichtung zur Luftbefüllung eines auf einer Felge angeordneten und mit dieser rotierenden Luftreifens, bestehend aus einer im wesentlichen zwischen dem Reifen und der Felge angeordneten schlauchartigen Struktur, die endseitig einerseits mit der Umgebung und andererseits über ein Ventil mit dem Innenraum des Reifens in Verbindung steht und die zum Befüllen des Reifens bei dessen Drehbewegung örtlich von der Umgebungsseite zum Reifen-Innenraum hin gequetscht wird.

Üblicherweise werden die auf Rädern angeordneten Luftreifen von Fahrzeugen nach Bedarf über ein Ventil befüllt. Bekannt ist ferner eine im zugehörigen Radnabenbereich vorgesehene Luftdurchführung mit steuerbaren Ventilen und mit einer im Radbereich angebrachten rotierenden Luftpumpe, deren Antriebsmoment durch eine Masse mit desaxiert angeordnetem Schwerpunkt bei der Raddrehung erzeugt wird. In der WO 02/051655 A2 ist weiterhin eine Vorrichtung nach Art einer Luftpumpe gezeigt, die durch die Eigenbewegung des Reifenwulstes beim Rotieren des Reifens angetrieben wird.

Während die einfache Befüllung über das Ventil gerne vernachlässigt oder vergessen wird, ist die Befüllung über steuerbare Ventile sehr aufwändig wegen der erforderlichen Leitungen, der Radlastsensierung und der Drucksensierung sowie der zugehörigen Steuerung. Auch die soweit genannten Luftpumpen-Bauarten bedingen einen hohen Bauaufwand. Demgegenüber einfacher ist eine Vorrichtung gemäß der DE 43 23 835 A, die den Oberbegriffs des Anspruchs 1 der vorliegenden Erfindung bildet. Hier ist innerhalb des Reifens im Bereich unterhalb von dessen Lauffläche ein Schlauch vorgesehen, der mit einer Reifen-Drehbewegung örtlich gequetscht wird. Der Schlauch befindet sich dabei auf einer separaten Stützstruktur, die ein Zusatzbauteil darstellt, was relativ aufwändig ist.

Weiteren Stand der Technik zeigt die DE 38 81 591 T2. Dabei ist eine erste in dieser Druckschrift gezeigte Ausführungsform auch noch relativ aufwändig, nachdem hierbei eine eigenständige Andrückeinrichtung benötigt wird, mit Hilfe derer ein zusammen mit dem Rad bzw. dem Reifen rotierender Schlauch örtlich fortlaufend gequetscht wird, wobei diese Andrückeinrichtung auch noch unterschiedlich positionierbar sein soll, damit eine Reifen-Befüllung nur bei Bedarf durchgeführt wird. Bei einer zweiten in dieser DE 38 81 591 T2 gezeigten Ausführungsform ist keine derartige Andrückeinrichtung erforderlich; vielmehr wirkt der Luftreifen selbst als solche. Jedoch kann nach dieser zweiten Ausführungsform nur dann Luft in den Reifen gepumpt werden, wenn dieser sich mit seiner Aufstandsfläche sehr stark abplattet, d.h. nurmehr einen sehr geringen Innendruck besitzt.

Eine vereinfachte und dennoch wirkungsvolle Vorrichtung zur Luftbefüllung eines Luftreifens nach dem Oberbegriff des Anspruchs 1 aufzuzeigen, ist Aufgabe der vorliegenden Erfindung.
Die Lösung dieser Aufgabe ist dadurch gekennzeichnet, dass die schlauchartige Struktur im Bereich zwischen dem Reifen und dem Felgenhorn vorgesehen ist. Vorteilhafte Aus- und Weiterbildungen sind Inhalt der Unteransprüche.

Erfindungsgemäß ist die sogenannte schlauchartige Struktur, welche durch örtlich verlagertes Quetschen als Luftpumpe fungiert, im Bereich des sog. Felgenhorns der den Reifen tragenden Felge vorgesehen. Bei geeigneter geometrischer Gestaltung bzw. Anordnung kann in diesem Bereich einfach sichergestellt werden, dass ein rotierender Reifen mit zu geringem Innendruck im sich kontinuierlich fortbewegenden Latschbereich, d.h. dem jeweils die Reifen-Aufstandsfläche darstellenden Umfangsabschnitt, die schlauchartige Struktur derart fortlaufend quetscht, dass durch diese Schlauch-Struktur wie gewünscht Luft von einem mit der Umgebung in Verbindung stehenden Ansaugabschnitt in den Reifen-Innenraum gefördert bzw. gepumpt wird. Dies erfolgt aufgrund der bei zu geringem Reifen-Innendruck stattfindenden Reifen-Verformung im dem Felgenhorn benachbarten Reifen-Seitenwandbereich bzw. im Bereich der Wulstkehlen-Ausbauchung des Reifens. Dabei tritt eine entsprechende Reifenverformung bereits dann auf, wenn der Reifen-Innendruck nur um ein relativ geringes Maß unterhalb des üblichen Druck-Sollwertes liegt. Liegt der Reifen-Innendruck hingegen im Bereich des Sollwerts oder darüber, so erfolgt üblicherweise keine entsprechend intensive Reifenverformung und es wird dann - erwünschtermaßen - auch keine zusätzliche Luft durch die schlauchartige Struktur in den Reifen - Innenraum gefördert.

Was die konstruktive Gestaltung betrifft, so empfiehlt es sich, die sog. schlauchartige Struktur in einem Kanal anzuordnen, da damit deren Position bestmöglich festgelegt und gehalten wird. So kann im Felgenhorn ein Kanal vorgesehen sein, der die schlauchartige Struktur in Form eines Schlauchs zumindest teilweise aufnimmt. Dieser Schlauch wird dann bei rotierendem Rad bzw. Reifen aufgrund von dessen Latsch örtlich fortlaufend durch den felgennahen Abschnitt der Reifen-Seitenwand bzw. von dessen sog. Wulstkehle gequetscht. Alternativ kann im Reifen selbst im Bereich von dessen Wulstkehle ein Kanal vorgesehen sein, der die schlauchartige Struktur in Form eines Schlauchs zumindest teilweise aufnimmt. Dann wird die Quetschkraft vom rotierenden Felgenhorn auf den Schlauch aufgebracht, der bei dieser Anordnung ebenfalls im wesentlichen nur im jeweiligen Latsch-Abschnitt des Reifens gegen das Felgenhorn gepresst wird. Ähnlich wirkt eine weitere Ausführungsform der vorliegenden Erfindung, bei welcher im Reifen selbst im Bereich von dessen Wulst oder Wulstkehle ein die schlauchartige Struktur bildender, einen geschlossenen Querschnitt beschreibender Hohlkanal eingeformt ist. Dieser sog. Hohl-Kanal kann bei der Reifen-Herstellung bspw. durch Anwendung des Prinzips "verlorene Form" aus der Gießtechnik oder durch Einbau eines nach dem Heizprozess herausziehbaren drahtförmigen Formteils erzeugt werden.

Grundsätzlich empfiehlt es sich, dass die Geometrie des Kanals und der schlauchartigen Struktur bzw. des diese bildenden Hohlkanals derart gewählt ist sowie die weiteren am Befüllen des Luftreifens durch örtliches Quetschen der schlauchartigen Struktur beteiligten Elemente derart gestaltet sind, dass dieses luftfördemde Quetschen im wesentlichen nur solange erfolgt, als der Reifen-Innendruck unterhalb eines für die jeweilige aktuelle Radlast notwendigen Sollwertes liegt. Der weiter oben bereits geschilderte Vorgang, bei welchem bei rotierendem Reifen die sog. schlauchartigen Struktur bzw. der Schlauch örtlich von der sog. Umgebungsseite zum Reifen-Innenraum hin verlagemd gequetscht wird, läuft dann nur solange ab, bis der Reifen-Innendruck seinen Sollwert erreicht, wonach bei gegebener Last die radiale Einfederung des Reifens und damit die Stärke der Seitenwand- bzw. Wulstkehlen-Ausbauchung soweit reduziert ist, dass der Schlauch (bzw. die schlauchartige Struktur) nicht mehr bis zur vollständigen inneren Abdichtung gequetscht wird und damit seine Luftverdichtungs-Fähigkeit verliert, d.h. keine weitere Luft mehr pumpen oder fördern kann. Dabei kann das Gesamtsystem bei entsprechender Auslegung der Komponenten also quasi selbstregelnd sein, nach dem Prinzip eines "Grenzdruckverdichters".

Wie bereits ausgeführt wurde, kann durch die sog. schlauchartige Struktur durch örtlich verlagertes Quetschen derselben Luft aus der Umgebung in den Reifen-Innenraum gefördert werden, wobei im Übergangsbereich zum Reifen-Innenraum ein geeignetes Ventil, insbesondere Rückschlagventil vorgesehen ist. Dieses kann ein Klappenventil sein oder durch das übliche Reifenventil gebildet sein. Ferner kann die schlauchartige Struktur ansaugseitig zur Umgebung hin mit einem Filter, insbsondere einem hydrophoben Kapillarporen-Membranfilter, versehen sein. Dieses verhindert, dass im Reifenbereich vorliegende Luftverunreinigungen und Wasser in die Reifenluft bzw. in die schlauchartige Struktur eingebracht werden, welche dort Ventilundichtheit, Verstopfung, Vereisung und Korrosion bzw. chemische Angriffe verursachen könnte(n).

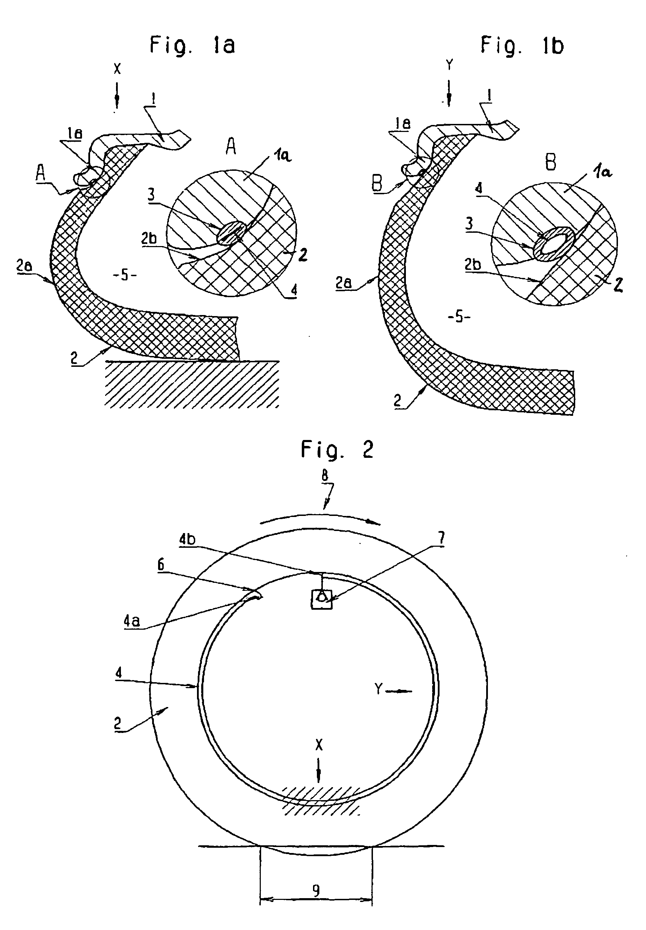

Im folgenden wird die Erfindung anhand eines lediglich prinzipiell dargestellten Ausführungsbeispieles weiter erläutert, wobei die beigefügte **Figur 1a** einen Teilschnitt durch eine Felge mit Luft-Reifen sowie mit einer erfindungsgemäßen schlauchartigen Struktur zeigt, wenn der Reifen quetschend auf diese Struktur bzw. auf den Schlauch einwirkt, während bei der entsprechenden Darstellung nach **Fig.1b** die geometrischen Verhältnisse abseits der sog. Latschzone des Reifens gezeigt sind. Diese beiden Figuren enthalten jeweils noch eine vergrößerte Ausschnitt-Darstellung A bzw. B. In **Figur 2** ist die Seitenansicht X aus Figur 1b auf den Reifen mit Felge und schlauchartiger Struktur stark vereinfacht dargestellt.

Mit der Bezugsziffer 1 ist die Felge eines Fahrzeug-Rades gekennzeichnet, auf welcher wie üblich ein Reifen 2 aufgezogen ist. Im Felgenhorn 1a der Felge 1 ist auf dessen im wesentlichen in Radialrichtung nach außen weisender Fläche umlaufend ein Kanal 3 vorgesehen, in dem sich über einen Großteil des Umfangs erstreckend eine sog. schlauchförmige Struktur 4 in Form eines Schlauches (ebenfalls Bezugsziffer 4) eingelegt ist. Das erste Ende 4a des Schlauchs 4 liegt in der Umgebung, irgendwo innerhalb der Felge d.h. radial innerhalb des Felgenbetts, während das zweite Ende 4b des Schlauches 4 über ein Rückschlag-Ventil 7 letztlich im Reifen-Innenraum 5 mündet bzw. mit diesem verbunden ist. Dabei kann der Schlauch 4 selbst im Reifen-Innenraum 5 und somit radial außerhalb des Felgenbetts münden, alternativ kann der Schlauch 4 jedoch auch direkt in ein ansonsten im wesentlichen übliches, figürlich nicht dargestelltes Reifen-Ventil, das zur regulären Luft-Befüllung des Reifens 2 vorgesehen ist, münden. Beim genannten Rückschlag-Ventil 7 kann es sich um ein eigenständiges Bauelement, bspw. in Form eines einfachen Klappenventils handeln, ggf. kann jedoch auch das übliche Reifen-Ventil die Funktion des Rückschlag-Ventils 7 übernehmen. Am anderen ersten Ende 4a des Schlauchs 4 ist ein handelsübliches hydrophobes Kapillarporen-Membranfilter 6 vorgesehen.

In **Figur 2** ist neben den soeben beschriebenen Schlauch-Enden 4a, 4b mit dem Filter 6 bzw. dem Rückschlag-Ventil 7 die Drehrichtung 8 des rotierenden Rades bzw. Reifens 2 dargestellt und femer der sog. Latschbereich 9 als derjenige Abschnitt des Reifens 2, der aktuell in Kontakt mit dem Boden ist und sich somit in bekannter Weise verformt. Beim Abrollen des nicht ausreichend mit Luft befüllten Reifens 2 auf dem Boden baucht sich im Latschbereich 9 des Reifens 2 dessen Seitenwand 2a im Bereich zwischen der Aufstandsfläche und der Wulstkehle 2b so weit nach außen, dass der Reifen 2 im Bereich seiner Wulstkehle 2b den teilweise im Kanal 3 liegenden Schlauch 4 fortlaufend quetscht, wie aus **Fig.1a** hervorgeht. Mit der Rotation des Fahrzeug-Rades bzw. Reifens 2 wird nun das im Schlauch 4 befindliche Luftvolumen ausgehend vom ersten Ende 4a kontinuierlich in Richtung zum zweiten Ende 4b bzw. zum Rückschlag-Ventil 7 hin verkleinert, wobei der Innendruck in diesem zwischen dem aktuellen Latschbereich 9 und dem Rückschlag-Ventil 7 liegenden Abschnitt des Schlauchs 4 zunimmt. Überschreitet der Innendruck in diesem Abschnitt des Schlauchs 4 den im Reifen-Innenraum 5 herrschenden Druck, so öffnet das Rückschlag-Ventil 7 und es strömt das besagte im Schlauch 4 unter Druck stehende Quantum von verdichteter Luft in den Reifen 2 und erhöht dessen Innendruck.

Nach dem Latschdurchlauf geht die Reifen-Seitenwand 2a mit der Wulstkehle 2b wieder in die Ausgangsform gemäß **Fig.1b** zurück, in welcher der Schlauch 4 praktisch nicht gequetscht wird. Sobald also der sog. Latschbereich 9 einen Schlauchabschnitt nahe des ersten Endes 4a des Schlauches 4 passiert hat, so dass in diesem Abschnitt kein Quetschen des Schlauches 4 erfolgt, so nimmt dieser wieder seine ursprüngliche runde Form ein, wobei über das Filter 6 neue Umgebungsluft in den Schlauch 4 gesaugt wird. Dabei zeigt **Fig.1b** im übrigen nicht nur die Verhältnisse bei im wesentlichen unbelasteten Reifen ohne Latsch, sondern ein ähnlicher Zustand, bei dem der Schlauch 4 nicht gequetscht wird, stellt sich auch dann ein, wenn der Luftdruck im Reifen-Innenraum 5 nicht geringer ist als ein Sollwert. Sobald also auf die beschriebene Weise ausgehend von einem nicht aureichend mit Luft befüllten Reifen 2 der Sollwert des Reifen-Innenndrucks erreicht wurde, wird selbsttätig keine weitere Luft in den Reifen-Innenraum 5 gefördert.

An einem Fahrzeug-Rad mit einer erfindungsgemäßen Vorrichtung zur Befüllung des Luftreifens kann im Fahrbetrieb der durch Diffusion unvermeidbare Druckverlust im Luftreifen selbsttätig ausgeglichen werden, wodurch vorteilhafterweise Wartungsfreiheit erzielt wird. Dies reduziert den Wartungsaufwand, den Reifenverschleiß und den Rollwiderstand und verhindert zu starke Leistungsabfälle von Lenkungs-, Fahrdynamik-Regelungs- und Bremssystemen des Fahrzeugs durch vernachlässigte Reifendruckpflege. Mit der erfindungsgemäßen Vorrichtung kann im Reifen die bei einer Beladungserhöhung des Fahrzeugs ohne gleichzeitige Druckerhöhung zu groß werdende Einfederung im weiteren Fahrbetrieb des Fahrzeugs vorteilhafterweise selbsttätig abgebaut werden. Hierdurch besteht nicht weiter die Gefahr einer unzulässig hohen mechanischen und thermischen Belastung des Reifens, wobei vorteilhafterweise der besagte Sollwert für den Reifen-Innendruck selbsttätig an eine zunehmende Belastung des Reifens bspw. durch Beladungserhöhung des Fahrzeugs angepasst wird. Vorteilhafterweise werden keine aufwändigen Elemente für die Luftführung, Steuerung und Regelung benötigt. Bei den sog. runflat-Reifen lässt sich dabei die sog. Plattrollstrecke erhöhen, wenn ein Druckverlust durch eine Reifenvertetzung mit der vorgeschlagenen Vorrichtung nennenswert verlangsamt werden kann, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Vorrichtung zur Luftbefüllung eines auf einer Felge (1) angeordneten und mit dieser rotierenden Luftreifens (2), bestehend aus einer im wesentlichen zwischen dem Reifen (2) und der Felge (1) angeordneten schlauchartigen Struktur (4), die endseitig einerseits mit der Umgebung und andererseits über ein Ventil (7) mit dem Innenraum (5) des Reifens (2) in Verbindung steht und die zum Befüllen des Reifens (2) bei dessen Drehbewegung örtlich von der Umgebungsseite zum Reifen-Innenraum (5) hin gequetscht wird,
**dadurch gekennzeichnet, dass** die schlauchartige Struktur (4) im Bereich zwischen dem Reifen (2) und dem Felgenhorn (1a) vorgesehen ist.

2. Vorrichtung nach Anspruch 1,
**dadurch gekennzeichnet, dass** im Felgenhorn (1a) ein Kanal (3) vorgesehen ist, der die schlauchartige Struktur (4) in Form eines Schlauchs (4) zumindest teilweise aufnimmt.

3. Vorrichtung nach Anspruch 1,
**dadurch gekennzeichnet, dass** im Reifen (2) im Bereich von dessen Wulst oder Wulstkehle (2b) ein die schlauchartige Struktur (4) bildender, einen geschlossenen Querschnitt beschreibender Hohlkanal eingeformt ist.

4. Vorrichtung nach Anspruch 1,
**dadurch gekennzeichnet, dass** im Reifen (2) im Bereich von dessen Wulstkehle (2b) ein Kanal vorgesehen ist, der die schlauchartige Struktur (4) in Form eines Schlauchs zumindest teilweise aufnimmt.

5. Vorrichtung nach einem der vorangegangenen Ansprüche,
**dadurch gekennzeichnet, dass** die Geometrie des Kanals (3) und der schlauchartigen Struktur (4) derart gewählt ist sowie die weiteren am Befüllen des Luftreifens (2) durch örtliches Quetschen der schlauchartigen Struktur (4) beteiligten Elemente derart gestaltet sind, dass dieses luftfördernde Quetschen im wesentlichen nur solange erfolgt, als der Reifen-Innendruck unterhalb eines Sollwertes liegt.

6. Vorrichtung nach einem der vorangegangenen Ansprüche,
**dadurch gekennzeichnet, dass** die schlauchartige Struktur (4) ansaugseitig zur Umgebung hin mit einem Filter (6), insbesondere einem hydrophoben Kapillarporen-Membranfilter versehen ist.

7. Vorrichtung nach einem der vorangegangenen Ansprüche,
**dadurch gekennzeichnet, dass** das der schlauchartigen Struktur (4) reifeninnenseitig zugeordnete Ventil (7) als Rückschlagventil ausgebildet ist.

## Claims

1. A device for filling air into a pneumatic tyre (2) arranged on a rim (1), rotating together with this rim, comprising a hose-type structure (4) arranged substantially between the tyre (2) and the rim (1), which structure is connected at the end side, on the one hand, to the environment and, on the other hand, via a valve (7) to the interior (5) of the tyre (2) and which, for filling the tyre (2) during its rotational movement is locally squeezed from the environment side toward the tyre interior,
**characterised in that** the hose-type structure (4) is provided in the region between the tyre (2) and the rim flange (1a).

2. A device according to claim 1,
**characterised in that** a duct (3), which at least partially receives the hose-type structure (4) in form of a hose (4), is provided in the rim flange (1a).

3. A device according to claim 1,
**characterised in that** a hollow duct which forms the hose-type structure (4) and describes a closed cross-section, is formed in the tyre (2) in the region of its bead or bead throat (2b).

4. A device according to claim 1,
**characterised in that** a duct, which at least partially receives the hose-type structure (4) in form of a hose, is provided in the tyre (2) in the region of its bead throat (2b).

5. A device according to any one of the preceding claims,
**characterised in that** the geometry of the duct (3) and the hose-type structure (4) is selected in such a way, and the further elements involved in filling the pneumatic tyre (2) by local squeezing of the hose-type structure (4) are designed in such a way, that this air-conveying squeezing substantially only takes place for as long as the internal tyre pressure is below a desired value.

6. A device according to any one of the preceding claims,
**characterised in that** the hose-type structure (4) is provided, on the intake side toward the environment, with a filter (6), more especially a hydrophobic capillary-pore membrane filter.

7. A device according to any one of the preceding claims,
**characterised in that** the valve (7) associated on the inside of the tyre with the hose-type structure (4) is configured as a check valve.

## Revendications

1. Dispositif pour gonfler un pneu (2) disposé sur une jante (1) et en rotation avec celle-ci, comprenant une structure en forme de chambre à air (4) disposée pour l'essentiel entre le pneu (2) et la jante (1) dont les extrémités communiquent d'une part avec l'environnement et d'autre part avec l'espace intérieur de pneu (5) par l'intermédiaire d'une valve (7) et qui est écrasée localement depuis le côté environnement vers l'espace intérieur de pneu (5) pour le gonflage du pneu (2) lors de son mouvement de rotation,
**caractérisé en ce que**
la structure en forme de chambre à air (4) est prévue dans la zone entre le pneu (2) et le rebord de jante (1a).

2. Dispositif selon la revendication 1,
**caractérisé par**
un canal (3) recevant au moins partiellement la structure en forme de chambre à air (4) dans le rebord de jante (1a).

3. Dispositif selon la revendication 1,
**caractérisé en ce qu'**
un canal creux décrivant une section transversale fermée et formant la structure en forme de chambre à air (4) est moulé dans le pneu (2), dans la zone de son talon ou de sa rainure de talon (2b).

4. Dispositif selon la revendication 1,
**caractérisé par**
un canal recevant au moins partiellement la structure en forme de chambre à air (4) dans le pneu (2), dans la zone de sa rainure de talon (2b).

5. Dispositif selon l'une,des revendications précédentes,
**caractérisé en ce que**
la géométrie du canal (3) et de la structure en forme de chambre à air (4) est choisie, et les autres éléments participant au gonflage du pneu (2) par un écrasement local de la structure en forme de chambre à air (4) sont configurés de telle sorte que cet écrasement pour transporter l'air ne s'effectue pour l'essentiel que tant que la pression intérieure de pneu est inférieure à une valeur de consigne.

6. Dispositif selon l'une des revendications précédentes,
**caractérisé en ce que**
côté aspiration vers l'environnement la structure en forme de chambre à air (4) est munie d'un filtre (6), en particulier d'un filtre à membrane hydrophobe à pores capillaires.

7. Dispositif selon l'une des revendications précédentes,
**caractérisé en ce que**
la valve (7) associée à la structure en forme de chambre à air (4) à l'intérieur du pneu est un clapet anti-retour.
